# EUROPÄISCHE PATENTSCHRIFT

(11) **EP 0 471 198 B1**
(45) Veröffentlichungstag und Bekanntmachung des Hinweises auf die Patenterteilung: **02.03.1994**
(21) Anmeldenummer: 91111906.3
(22) Anmeldetag: 17.07.1991
(51) Int. Cl.: B60N 3/08, A24F 19/06, B60R 7/06

(54) **Kippascher für Fahrzeuge**
Tiltable ashtray for vehicles
Cendrier basculant pour véhicules

(30) Priorität: 11.08.1990 DE 4025534
(43) Veröffentlichungstag der Anmeldung: 19.02.1992
(73) Patentinhaber: Gebr. Happich GmbH, D-42097 Wuppertal (DE)
(72) Erfinder: Dietz, Günter, W-5600 Wuppertal 1 (DE); Dabringhaus, Volker, W-5600 Wuppertal 1 (DE); Gütlein, Udo, W-8028 Taufkirchen (DE); Haase, Hans-Joachim, W-8300 Altdorf (DE)

(56) Entgegenhaltungen:
- EP-A- 0 163 181
- EP-A- 0 337 157
- DE-A- 2 030 478
- DE-A- 2 342 512
- DE-A- 3 237 614
- GB-A- 2 200 273
- US-A- 4 830 026

## Beschreibung

Die Erfindung bezieht sich auf einen Kippascher für Fahrzeuge, bestehend aus einem in einer Wandaussparung befestigbaren Aufnahmerahmen, einem damit scharnierartig verbundenen Aufnahmegehäuse und einem darin angeordneten Aschereinsatz, der gegen ein Ablagefach zur Aufnahme von Kleinutensilien austauschbar ist.

Durch die DE-OS 37 41 096 ist ein Kippascher der gattungsgemäßen Art bekanntgeworden. Bei diesem bekannten Ascher ist vorgesehen, daß der Aschertopf aus dem Aufnahmegehäuse herausnehmbar und gegen Tonträgerkassetten austauschbar ist. Im übrigen soll der Ascher nebst zugehöriger Funktionsteile unverändert bleiben. Die DE-OS 38 02 801 zeigt einen Umrüstsatz für Kraftfahrzeuge, die eine Aschenbecheraufnahme für einen entnehmbaren Aschenbechereinsatz aufweisen und der Umrüstsatz ist gekennzeichnet durch eine, an die Aschenbecheraufnahme angepaßte und anstelle des Aschenbechereinsatzes in diese einsetzbare Halterung für eine Zusatzausstattung, beispielsweise für ein Kleingerät wie einen Taschenrechner, einen Fotoapparat oder dergleichen oder für einen Behälter für Keinutensilien wie Sonnenbrillen, einen Lippenstift oder dergleichen. Gemäß der Lehre dieser Druckschrift soll ein kompletter Ascher durch ein anders Funktionsteil ersetzt werden, was aber schon aus Kostengründen nicht sinnvoll erscheint.

Der vorliegenden Erfindung liegt nun die Aufgabe zugrunde, einen Kippascher der eingangs genannten Art so zu gestalten, daß dieser in besonders einfacher, kostengünstiger und montagefreundlicher Weise in eine Ablage umgewandelt werden kann, wobei weiterhin angestrebt wird, daß sich die Ablage durch ein Ablagefach mit großer Aufnahmekapazität und auch dadurch auszeichnen soll, daß sie bei Dunkelheit problemlos benutzt werden kann.

Gemäß der Erfindung wird diese Aufgabe dadurch gelöst, daß der Aschereinsatz einen herausnehmbar im Aufnahmegehäuse angeordneten Aschertopf, einen Zigarettenanzünder und ein separates Trägergehäuse für den Zigarettenanzünder umfaßt, daß das Trägergehäuse durch lösbare Klipsverbindungen separat herausnehmbar ist, daß das Ablagefach gegen den aus Aschertopf, Zigarettenanzünder und Trägergehäuse bestehenden Aschereinsatz austauschbar und durch lösbare Klipsverbindungen im Aufnahmegehäuse befestigbar ist und daß das Aufnahmegehäuse eine festinstallierte, mit der Fahrzeugelektrik verbundene Kontaktbaugruppe trägt, die aus einer Kontaktkupplung für den Zigarettenanzünder und mindestens einer weiteren Kontaktkupplung für eine elektrische Beleuchtungseinrichtung besteht.

Durch diese erfindungsgemäßen Maßnahmen ist es möglich, nicht nur den Aschertopf sondern auch das Trägergehäuse für den Zigarettenanzünder aus dem Aufnahmegehäuse zu entfernen und dadurch einen relativ großen Aufnahmeraum für ein Ablagefach zu gewinnen, das entsprechend groß dimensioniert werden kann, und damit eine relativ große Aufnahmekapazität für Kleinutensilien aufweist. Da erfindungsgemäß sowohl das Trägergehäuse als auch das Ablagefach durch lösbare Klipsverbindungen im Aufnahmegehäuse befestigbar sind, ist eine schnelle und einfach durchführbare Montage oder Demontage dieser Bauteile realisierbar. Durch die fest am Aufnahmegehäuse installierte Kontaktbaugruppe können die elektrischen Anschlüsse beim Umwandeln des Aschers in eine Ablage oder umgekehrt an Ort und Stelle verbleiben. Die erfindungsgemäß noch vorgesehene Beleuchtungseinrichtung ermöglicht eine problemlose Benutzung des Aschers oder der Ablage auch bei Dunkelheit, weil das von der Beleuchtungseinrichtung ausgehende Licht durch ein Leuchtfenster in einer Wandung des Aschertopfs oder des Ablagefachs jeweils in das Topf- oder Fachinnere geleitet werden kann.

Zur einfachen und kostengünstigen Herstellbarkeit des Aschers oder Ablagefachs trägt die Maßnahme wesentlich bei, daß die Kontaktbaugruppe auf einer mit dem Aufnahmegehäuse verbundenen Leitplatte angeordnet ist.

Ein Ausführungsbeispiel der Erfindung wird im folgenden anhand der Zeichnung näher erläutert. Es zeigen
- Fig. 1: den Kippascher im Querschnitt gesehen,
- Fig. 2: einen Schnitt etwa folgend der Linie II - II in Fig. 1 gemäß einer ersten Ausführungsform und
- Fig. 3: einen Schnitt wie in Fig. 2 gemäß einer zweiten Ausführungsform.

Der neue Kippascher besteht aus einem in einer nicht näher dargestellten Wandaussparung befestigbaren Aufnahmerahmen 1, einem damit scharnierartig verbundenen Aufnahmegehäuse 2 und einem darin herausnehmbar angeordneten Aschereinsatz 3.

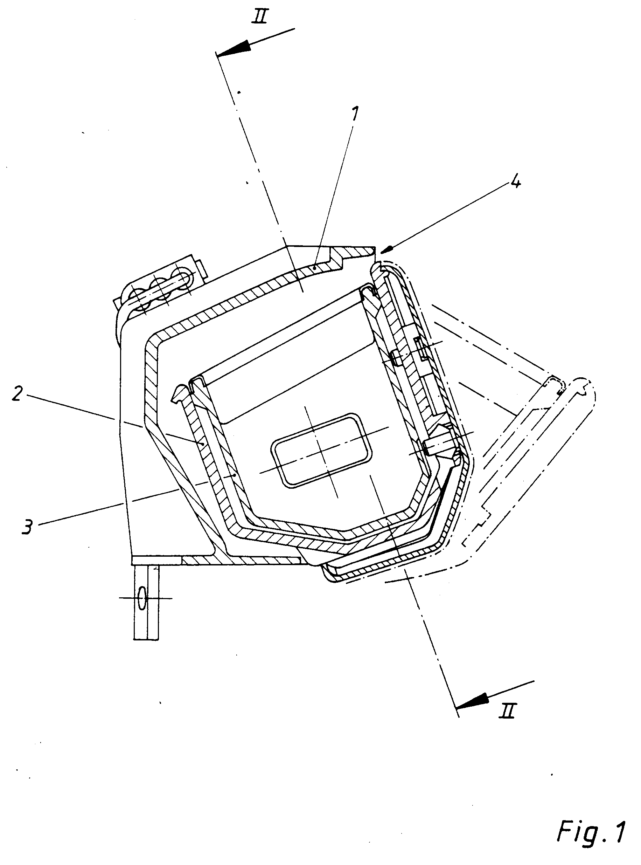

Der Aufnahmerahmen 1 weist eine frontseitige Öffnung 4 auf, die die Montage des Aufnahmegehäuses 2 und eine kippbewegliche Lagerung desselben ermöglicht. In Fig. 1 ist mit ausgezogenen Linien die geschlossene und mit strichpunktierten Linien die geöffnete Lage des Kippaschers dargestellt. Der zweckmäßigerweise als Kunststoff-Spritzgußteil ausgebildete Aufnahmerahmen 1 weist weiterhin Seitenwandungen 5 auf, die mit Lagerbohrungen ausgebildet sind, in die am Aufnahmegehäuse 2, welches ebenfalls bevorzugterweise aus einem Kunststoff-Spritzgußteil besteht, angeformte Lagerzapfen 6 eingreifen.

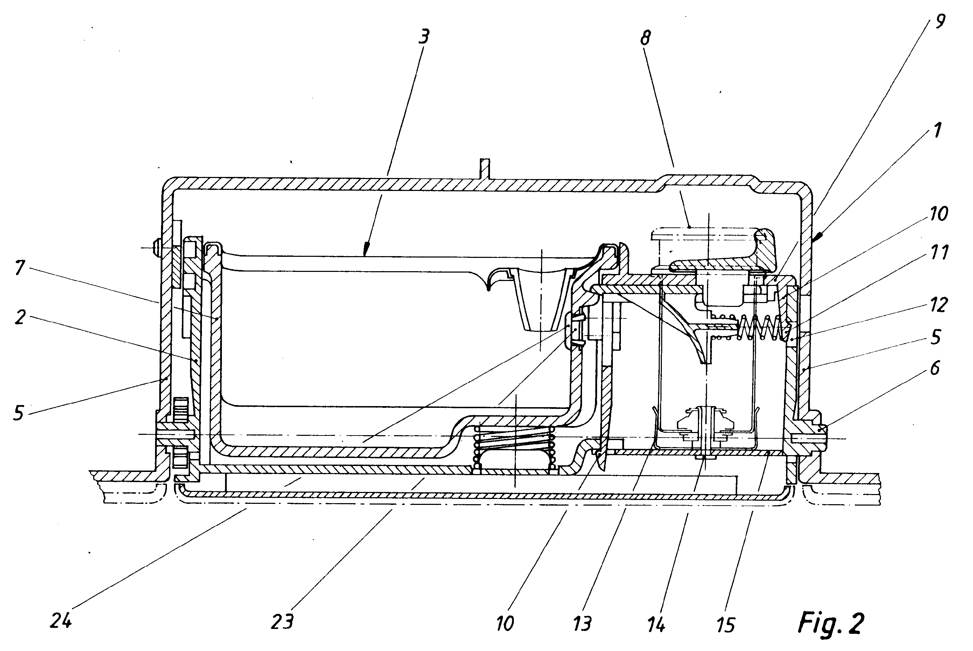

Bei der Ausführungsform des Kippaschers nach Fig. 2 besteht der Aschereinsatz 3 aus einem Aschertopf 7 und aus einem einen Zigarettenanzünder 8 halternden Trägergehäuse 9, welches bevorzugterweise ebenfalls als Kunststoff-Spritzgußteil ausgebildet ist. Der Aschertopf 7 ist in herkömmlicherweise aus dem Aufnahmegehäuse 2 herausnehmbar. Dabei können an sich bekannte und daher hier nicht näher zu erläuternde Mittel, wie Auswerferfeder und Entriegelungsmechanismus vorgesehen sein, um den Aschertopf 7 zwecks Erleichterung des Herausnehmens in eine griffgünstige Position zu bringen.

Das Trägergehäuse 9 ist am Aufnahmegehäuse 2 durch Klipsverbindungen gehalten. Als Klipsverbindungen dienen im Ausführungsbeispiel am Trägergehäuse 9 angeformte Rastfederarme 10, die mit Rastklinken 11 in Wandaussparungen 12 des Aufnahmegehäuses 2 einrasten. Die Klipsverbindungen bieten nicht nur Vorteile im Bezug auf eine schnelle und einfache Montage sondern ermöglichen auch eine einfache Demontage des Trägergehäuses 9.

Der Zigarettenanzünder 8 greift untenendig in eine hierfür vorgesehene Kontaktkupplung 13 mit Kontaktstift 14 herausziehbar ein. Die Kontaktkupplung 13 nebst Kontaktstift 14 werden von einer elektrischen Leiterplatte 15 getragen, deren aufgedruckte Leiterbahnen in geeigneter Weise mit der elektrischen Stromversorgung eines Kraftfahrzeuges verbindbar sind. Die Leiterplatte 15, die auch eine Beleuchtungseinrichtung 16 mit Glühlampe 17 trägt, ist fest mit dem Aufnahmegehäuse 2 verbunden. Hierfür können Steck-, Klips- oder Nietverbindungen dienen.

Um den Kippascher in eine Ablage umzuwandeln, ist es lediglich erforderlich, aus dem Aufnahmegehäuse 2, den Aschertopf 7, den Zigarettenanzünder 8 und das Trägergehäuse 9 zu entfernen und in den Aufnahmehohlraum des Aufnahmegehäuses 2 ein passendes Ablagefach 18 einzusetzen. Ein Entfernen der Leiterplatte 15 nebst der daran angeordneten Kontaktkupplungen ist weder erforderlich noch vorgesehen. Vielmehr soll die Leiterplatte nebst vorgenannter Einrichtungen bleibend am Aufnahmegehäuse installiert sein.

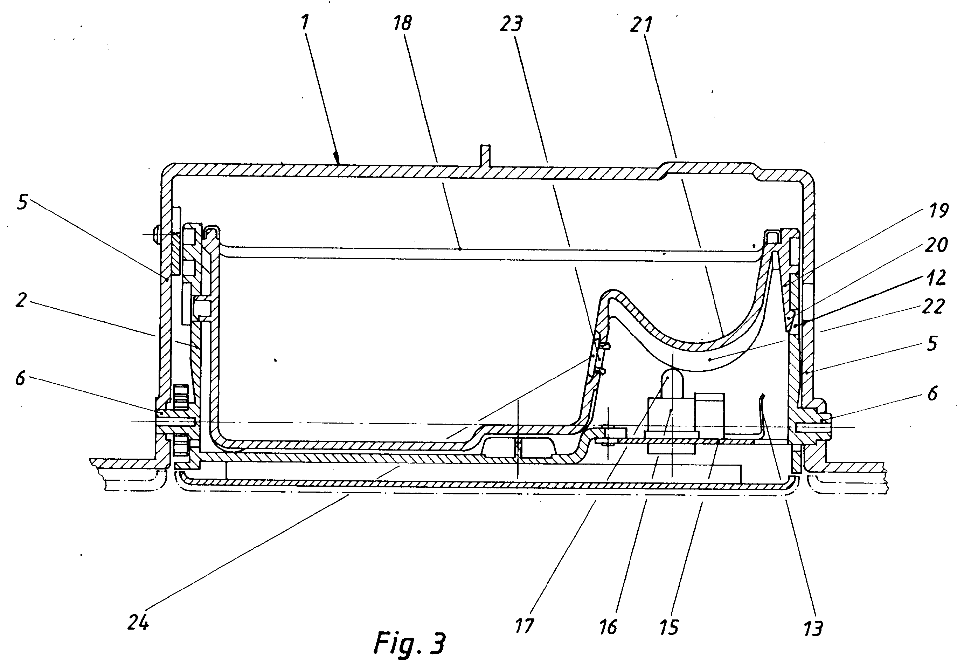

Ein Ablagefach 18 zeigt Fig. 3, wobei dasselbe ebenfalls ein Kunststoff-Spritzgußteil ist und klipsartig am Aufnahmegehäuse 2 festgelegt werden kann. Auch dienen am Ablagefach 18 angeformte Rastfederarme 19 mit Rastklinken 20, die in die Wandaussparungen 12 des Aufnahmegehäuses 2 einrasten, zur schnellen und einfachen Montage wie auch Demontage, falls die Ablage wieder in einen Ascher umgewandelt werden soll. Im Bereich der Beleuchtungseinrichtung 16 weist das Ablagefach 18 einen diese berücksichtigenden Freiraum auf. Dabei ist bevorzugt eine Mulde 21 mit Vertiefungen 22 ausgebildet, wobei letztere in Reihen nebeneinander angeordnet sein können und als Münzhalter dienen.

Aus Fig. 2 und 3 ist noch ersichtlich, daß sowohl der Aschertopf 7 als auch das Ablagefach 18 mit Fensteröffnungen 23 ausgebildet sind, die Linsen 24 oder dergleichen aufnehmen. Auf diese Weise ist ein Ausleuchten des Aschertopfs 7 oder des Ablagefachs 18 ermöglicht.

## Patentansprüche

1. Kippascher für Fahrzeuge, bestehend aus einem in einer Wandaussparung befestigbaren Aufnahmerahmen (1), einem damit scharnierartig verbundenen Aufnahmegehäuse (2) und einem darin angeordneten Aschereinsatz (3), der gegen ein Ablagefach (18) zur Aufnahme von Kleinutensilien austauschbar ist, dadurch gekennzeichnet, daß der herausnehmbar im Aufnahmegehäuse (2) angeordnete Aschereinsatz (3) einen Aschertopf (7), einen Zigarettenanzünder (8) und ein separates Trägergehäuse (9) für den Zigarettenanzünder umfaßt, daß das Trägergehäuse (9) durch lösbare Klipsverbindungen separat herausnehmbar ist, daß das Ablagefach (18) gegen den aus Aschertopf (7), Zigarettenanzünder (8) und Trägergehäuse (9) bestehenden Aschereinsatz (3) austauschbar und durch lösbare Klipsverbindungen im Aufnahmegehäuse (2) befestigbar ist, und daß das Aufnahmegehäuse (2) eine fest installierte, mit der Fahrzeugelektrik verbundene Kontaktbaugruppe (13, 14) trägt, die aus einer Kontaktkupplung für den Zigarettenanzünder (8) und mindestens einer weiteren Kontaktkupplung für eine elektrische Beleuchtungseinrichtung (16) besteht.

2. Kippascher nach Anspruch 1, dadurch gekennzeichnet, daß die Kontaktbaugruppe auf einer mit dem Aufnahmgehäuse (2) verbundenen Leiterplatte (15) angeordnet ist.

## Claims

1. A tiltable ash-tray for vehicles, comprising a support frame (1) which is able to be secured in a wall recess, a support housing (2), connected thereto in the manner of a hinge, and an ash-tray insert (3) arranged therein, which is able to be exchanged for a storage compartment (18) to hold small items, characterised in that the ash-tray insert (3), which is arranged in the support housing (2) so as to be removable, comprises an ash-tray vessel (7), a cigarette lighter (8) and a separate carrier housing (9) for the cigarette lighter, that the carrier housing (9) is removable separately through releasable clip connections, that the storage compartment (18) is able to be exchanged for the ash-tray insert (3) comprising the ash-tray vessel (7), the cigarette lighter (8) and the carrier housing (9) and is able to be secured in the support housing (2) by releasable clip connections, and that the support housing (2) carries a fixedly installed contact assembly (13,14) connected to the electrical system of the vehicle, which assembly comprises a contact coupling for the cigarette lighter (8) and at least one further contact coupling for an electrical illuminating arrangement (16).

2. A tiltable ash-tray according to Claim 1, characterised in that the contact assembly is arranged on a conductor plate (15) which is connected to the support housing (2).

## Revendications

1. Cendrier basculant pour véhicules, composé d'un cadre de logement (1) pouvant être fixé dans un évidement de paroi, d'un boîtier de logement (2) lui étant relié avec une liaison en charnière et d'une garniture de cendrier (3) disposée à l'intérieur, et pouvant être échangée contre un compartiment fourre-tout (18) destiné à recevoir de petits ustensiles, caractérisé en ce que la garniture de cendrier (3) disposée de façon amovible dans le boîtier de logement (2) comprend un pot à cendres (7) , un allume-cigares (8) et un boîtier support (9) séparé, pour l'allume-cigares, en ce que le boîtier support (9) peut être enlevé séparément au moyen de liaisons à encliquetage désolidarisables, en ce que le compartiment fourre-tout (18) peut être échangé pour la garniture de cendrier (3) composée du pot à cendres (7) , de l'allume-cigares (8) et du boîtier support (9), et peut être fixé dans le boîtier de logement (2) au moyen de liaisons à encliquetage désolidarisables, et en ce que le boîtier de logement (2) porte un groupe de contacts (13, 14) installé rigidement et relié au système électrique du véhicule, composé d'un couplage de contacts pour l'allume-cigares (8) et d'au moins un autre couplage de contact pour un dispositif d'éclairage (16) électrique.

2. Cendrier basculant selon la revendication 1, caractérisé en ce que le groupe de contacts est disposé sur une plaquette à circuits imprimés (15) reliée au boîtier de logement (2).
